# EUROPÄISCHE PATENTSCHRIFT

(11) **EP 1 186 193 B1**
(45) Veröffentlichungstag und Bekanntmachung des Hinweises auf die Patenterteilung: **10.08.2005**
(21) Anmeldenummer: 00943674.2
(22) Anmeldetag: 31.05.2000
(51) Int. Cl.: H04Q 7/38

(54) **VERFAHREN UND ANORDNUNG ZUR ÜBERPRÜFUNG EINER AUTHENTIZITÄT EINES ERSTEN KOMMUNIKATIONSTEILNEHMERS IN EINEM KOMMUNIKATIONSNETZ**
METHOD AND SYSTEM FOR VERIFYING THE AUTHENTICITY OF A FIRST COMMUNICATION PARTICIPANT IN A COMMUNICATIONS NETWORK
PROCEDE ET SYSTEME POUR LA VERIFICATION DE L'AUTHENTICITE D'UN PREMIER PARTENAIRE DE COMMUNICATION DANS UN RESEAU DE COMMUNICATION

(30) Priorität: 15.06.1999 DE 19927271
(43) Veröffentlichungstag der Anmeldung: 13.03.2002
(60) Teilanmeldung: 03003072.0
(73) Patentinhaber: SIEMENS AKTIENGESELLSCHAFT, 80333 München (DE)
(72) Erfinder: HORN, Günther, D-81541 München (DE); CUELLAR, Jorge, D-82065 Baierbrunn (DE)
(86) Internationale Anmeldenummer: PCT/DE2000/001788
(87) Internationale Veröffentlichungsnummer: WO 2000/078078

(56) Entgegenhaltungen:
- WO-A-91/01067
- US-A- 5 799 084

## Beschreibung

Die Erfindung betrifft ein Verfahren und eine Anordnung zur Überprüfung einer Authentizität eines ersten Kommunikationsteilnehmers in einem Kommunikationsnetz.

In einem Kommunikationsnetz werden im allgemeinen Daten zwischen Kommunikationsteilnehmern, beispielsweise einem Dienstanbieter und einem Dienstnutzer, übertragen. Um ein Kommunikationsnetz vor einem Eindringen eines nichtberechtigten Kommunikationsteilnehmers in das Kommunikationsnetz zu schützen, wird in der Regel die Authentizität eines jeden Kommunikationsteilnehmers überprüft.

Aus Dokument [1] ist ein Verfahren und eine Anordnung zur Überprüfung einer Authentizität eines Kommunikationsteilnehmers, insbesondere eines Dienstanbieters oder eines Dienstnutzers, in einem Kommunikationsnetz bekannt.

Das aus dem Dokument [1] bekannte Verfahren und die entsprechende Anordnung basieren auf einem sogenannten 3G TS 33.102 Version 3.0.0-Draft-Standard, welcher eine Sicherheits-Architektur eines Mobilfunksystems beschreibt.

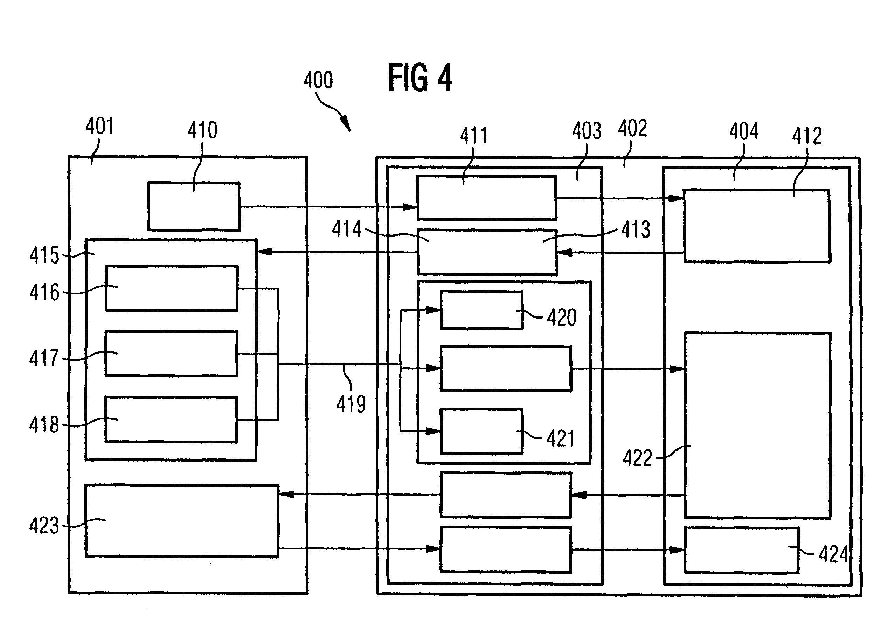

In **Fig.4** ist die Vorgehensweise bei einer Überprüfung einer Authentizität eines Kommunikationsteilnehmers, wie sie aus dem Dokument [1] bekannt ist, symbolhaft dargestellt und wird im folgenden kurz und auszugsweise erläutert.

Eine Übertragung von Daten ist in **Fig.4** jeweils durch einen Pfeil dargestellt. Eine Richtung eines Pfeils kennzeichnet eine Übertragungsrichtung bei einer Datenübertragung.

**Fig.4** zeigt ein Mobilfunksystem 400, umfassend einen Nutzer 401 einer Kommunikationsdienstleistung, beispielsweise ein Mobiltelefon, und einen Anbieter 402 einer Kommunikationsdienstleistung. Der Anbieter 402 umfaßt ein Einwählnetz 403 mit einem Einwählnetzbetreiber, bei dem der Nutzer 401 lokal eine Kommunikationsdienstleistung anfordert, und ein Heimatnetz 404 mit einem Heimatnetzbetreiber, bei dem der Nutzer 401 angemeldet und registriert ist.

Ferner weisen der Nutzer 401, das Einwählnetz 403 und das Heimatnetz 404 jeweils eine zentrale Verarbeitungseinheit mit einem Speicher auf, beispielsweise einen Server (Zentralrechner), mit welcher Verarbeitungseinheit die im folgenden beschriebene Vorgehensweise überwacht und gesteuert wird und auf welchem Speicher Daten gespeichert werden und/oder sind.

Das Einwählnetz 403 und das Heimatnetz 404 sind über eine Datenleitung, über welche digitale Daten übertragen werden können, miteinander verbunden. Der Nutzer 401 und das Einwählnetz 403 sind über ein beliebiges Übertragungsmedium zur Übertragung von digitalen Daten miteinander verbunden.

Bei einer Kommunikation wählt sich der Nutzer 401 in das Einwählnetz 403 ein 410. Zu Beginn der Kommunikation erfolgt eine Überprüfung sowohl der Authentizität des Nutzers 401 als auch der Authentizität des Anbieters 402.

Dazu fordert das Einwählnetz 403 sogenannte Authentifikationsdaten, mit welchen die Überprüfung der Authentizität des Nutzers 401 und des Anbieters 402 möglich ist, von dem Heimatnetz 404 an 411.

Die Authentifikationsdaten, welche von dem Heimatnetz 404 ermittelt werden, umfassen eine Zufallszahl und eine Sequenzfolgenummer des Anbieters 402. Die Sequenzfolgennummer des Anbieters 402 wird derart ermittelt, daß ein Zähler des Anbieters 402 bei jedem Kommunikationsversuch zwischen dem Nutzer 401 und dem Anbieter 402 die Sequenzfolgenummer des Anbieters 402 um den Wert 1 erhöht.

Es ist anzumerken, daß die Zufallszahl und die Sequenzfolgenummer des Anbieters 402 nur einen Teil der Authentifikationsdaten darstellen und nicht abschließend zu verstehen sind. Weitere Authentifikationsdaten sind aus [1] bekannt.

Das Heimatnetz 404 überträgt die angeforderten Authentifikationsdaten an das Einwählnetz 403 412. Das Einwählnetz 403 bearbeitet die empfangenen Authentifikationsdaten in geeigneter Weise 413 und überträgt die bearbeiteten Authentifikationsdaten an den Nutzer 401 414.

Der Nutzer 401 überprüft unter Verwendung einer eigenen Sequenzfolgenummer, welche entsprechend der Sequenzfolgenummer des Anbieters 402 gehandhabt wird, und der Sequenzfolgenummer des Anbieters 402 die Authentizität des Anbieters 402 415.

Die Vorgehensweise bei der Überprüfung der Authentizität des Anbieters 402 ist in [1] beschrieben.

Ein Ergebnis der Überprüfung der Authentizität des Anbieters 402, "Authentizität des Anbieters in Ordnung" 416, "Authentizität des Anbieters in Ordnung, aber ein Sequenzfehler aufgetreten" 417 oder "Authentizität des Anbieters nicht in Ordnung" 418, wird von dem Nutzer 401 an den Anbieter 402 übertragen 419.

Bei dem Ergebnis "Authentizität des Anbieters in Ordnung" 416 überprüft das Einwählnetz 403, wie es in [1] beschrieben ist, die Authentizität des Nutzers 401 420.

Bei dem Ergebnis "Authentizität des Anbieters nicht in Ordnung" 418 wird die Kommunikation unterbrochen bzw. neu begonnen 421.

Bei dem Ergebnis "Authentizität des Anbieters in Ordnung, aber ein Sequenzfehler aufgetreten" 417 erfolgt eine Resynchronisation derart, daß das Heimatnetz 404 eine Resynchronisationsanfrage an den Nutzer 401 sendet 422. Der Nutzer antwortet mit einer Resynchronisationsantwort, bei welcher Resynchronisationsdaten an das Heimatnetz 404 übertragen werden 423. In Abhängigkeit der Resynchronisationsantwort wird die Sequenzfolgenummer des Anbieters 402 verändert 424. Anschließend erfolgt die Prüfung der Authentizität des Nutzers 401, wie es aus [1] bekannt ist.

Die US-A-5 799 084 beschreibt ein Verfahren zur Überprüfung des Authentizität einer Mobilstation durch ein HLR/AC, wobei die Mobilstation aus einer Zufallszall und einer Folgenummer eine erste Authentifikationsnachricht bildet und diese an das HLR/AC sendet. Das HLR/AC vergleicht diese Nachricht mit einer zweiten, von dem HLR/AC unter Verwendung einer von ihr gebildeten Zufallszall berechneten Authentifikationsnachricht.

Die beschriebene Vorgehensweise weist den Nachteil auf, daß bei einer Überprüfung einer Authentizität eines Kommunikationsteilnehmers, insbesondere bei der Überprüfung der Authentizität eines Dienstanbieters, viele Daten zwischen den Kommunikationsteilnehmern übertragen werden müssen.

Somit liegt der Erfindung das Problem zugrunde, ein gegenüber dem bekannten Verfahren und der bekannten Anordnung vereinfachtes und verbessertes Verfahren sowie eine vereinfachte und verbesserte Anordnung zur Überprüfung einer Authentizität eines Kommunikationsteilnehmers in einem Kommunikationsnetz anzugeben.

Das Problem wird durch das Verfahren sowie durch die Anordnung mit den Merkmalen gemäß den unabhängigen Patentansprüchen gelöst.

Bei dem Verfahren zur Überprüfung einer Authentizität eines ersten Kommunikationsteilnehmers in einem Kommunikationsnetz wird bei dem ersten Kommunikationsteilnehmers unter Verwendung einer Fehlererkennungsangabe des ersten Kommunikationsteilnehmers und einer Information über eine Zufallsangabe, die von einem zweiten Kommunikationsteilnehmer in dem Kommunikationsnetz zur dem ersten Kommunikationsteilnehmer übertragen wurde , eine erste Fehlerinformation gebildet. Die erste Fehlrinformation wird vom ersten zum zweiten Kommunikationsteilnehmer übertragen. Bei dem zweiten Kommunikationsteilnehmer in dem Kommunikationsnetz wird unter Verwendung einer Fehlererkennungsangabe des zweiten Kommunikationsteilnehmers und der Information über die Zufallsangabe eine zweite Fehlerinformation gebildet. Unter Verwendung der ersten Fehlerinformation und der zweiten Fehlerinformation wird beim zweiten Kommunikationsteilnehmer die Authentizität des ersten Kommunikationsteilnehmers überprüft.

Bei der Anordnung zur Überprüfung einer Authentizität eines ersten Kommunikationsteilnehmers in einem Kommunikationsnetz ist der erste Kommunikationsteilnehmer derart eingerichtet, daß unter Verwendung einer Fehlererkennungsangabe des ersten Kommunikationsteilnehmers und einer Information über eine Zufallsangabe, die von einem zweiten Kommunikationsteilnehmer in dem Kommunicationsnetz zur dem ersten Kommunikationsteilnehmer übertragen wurde, eine erste Fehlerinformation gebildet wird. Die erste Fehleinformation wird vom ersten zum zweiten Kommunikationsteilnehmer übertragen. Ferner weist die Anordnung einen zweiten Kommunikationsteilnehmer in dem Kommunikationsnetz auf, der derart eingerichtet ist, daß unter Verwendung einer Fehlererkennungsangabe des zweiten Kommunikationsteilnehmers und der Information über die Zufallsangabe eine zweite Fehlerinformation gebildet wird. Unter Verwendung der ersten Fehlerinformation und der zweiten Fehlerinformation beim zweiten Kommunikationsteilnehmer wird die Authentizität des ersten Kommunikationsteilnehmers überprüft.

Unter der Überprüfung der Authentizität eines Kommunikationsteilnehmers in einem Kommunikationsnetz sind Verfahrensschritte zu verstehen, die im weiteren Sinn mit einer Überprüfung einer Berechtigung eines Kommunikationsteilnehmers zum Zugang zu einem Kommunikationsnetz oder einer Teilnahme an einer Kommunikation in einem Kommunikationsnetz durchgeführt werden.

Somit werden sowohl solche Verfahrensschritte umfaßt, die im Rahmen einer Überprüfung der Berechtigung eines Kommunikationsteilnehmers zum Zugang zu einem Kommunikationsnetz durchgeführt werden, als auch solche Verfahrensschritte umfaßt, die im Rahmen einer Bearbeitung oder einer Verwaltung von Daten, die bei der Überprüfung verwendet werden, durchgeführt werden.

Bevorzugte Weiterbildungen der Erfindung ergeben sich aus den abhängigen Ansprüchen.

Die im weiteren beschriebenen Weiterbildungen beziehen sich sowohl auf das Verfahren und die Anordnung.

Die Erfindung und die im weiteren beschriebenen Weiterbildungen können sowohl in Software als auch in Hardware, beispielsweise unter Verwendung einer speziellen elektrischen Schaltung realisiert werden.

In einer Ausgestaltung ist der erste Kommunikationsteilnehmer ein Dienstanbieter und/oder der zweite Kommunikationsteilnehmer ein Dienstnutzer in dem Kommunikationsnetz.

Bevorzugt wird als Fehlererkennungsangabe eine Sequenzfolgenummer verwendet.

In einer Ausgestaltung ist die Information über die Zufallsangabe eine Zufallszahl.

In einer Weiterbildung wird die Prüfung der Authentizität dadurch vereinfacht, daß eine Differenz zwischen der Fehlererkennungsangabe des ersten Kommunikationsteilnehmers und der Fehlererkennungsangabe des zweiten Kommunikationsteilnehmers ermittelt wird.

In einer Ausgestaltung wird die Prüfung der Authentizität dadurch hinsichtlich der Sicherheit des Kommunikationsnetzes weiter verbessert, daß die Differenz beschränkt wird

Bevorzugt wird eine Weiterbildung im Rahmen eines Mobilfunksystems eingesetzt. Bei dem Mobilfunksystem sind/ist der Dienstnutzer als Mobiltelefon und/oder der Dienstanbieter als Mobilfunknetzbetreiber realisiert.

In Figuren ist ein Ausführungsbeispiel der Erfindung dargestellt, welches im weiteren näher erläutert wird.

Es zeigen
- Figur 1: ein Mobilfunksystem;
- Figur 2: eine Skizze, in welcher symbolhaft eine Überprüfung einer Authentizität eines Kommunikationsteilnehmers dargestellt ist;
- Figur 3: ein Ablaufdiagramm, in dem einzelne Verfahrensschritte bei einer Überprüfung einer Authentizität eines Dienstanbieters in einem Kommunikationsnetz dargestellt sind;
- Figur 4: eine Skizze, in welcher symbolhaft eine Überprüfung einer Authentizität eines Kommunikationsteilnehmers gemäß dem 3G TS 33.102 Version 3.0.0-Standard dargestellt ist.

### Ausführungsbeispiel: Mobilfunksystem

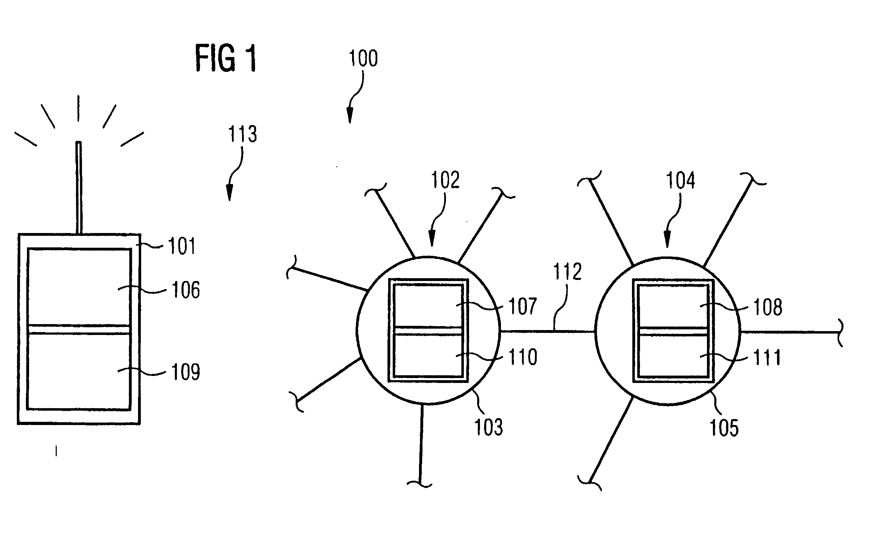

In **Fig.1** ist ein Mobilfunksystem 100 dargestellt. Das Mobilfunksystem 100 umfaßt ein Mobiltelefon 101, ein lokales Einwählnetz 102 mit einem Einwählnetzbetreiber 103 und ein Heimatnetz 104 mit einem Heimatnetzbetreiber 105.

Bei dem Heimatnetz 104 ist das Mobiltelefon 101 angemeldet und registriert.

Ferner weisen das Mobiltelefon 101, das Einwählnetz 102 und das Heimatnetz 104 jeweils eine zentrale Verarbeitungseinheit 106, 107, 108 mit einem Speicher 109, 110, 111 auf, mit welchen Verarbeitungseinheiten 106, 107, 108 die im folgenden beschriebene Vorgehensweise überwacht und gesteuert wird und auf welchen Speichern 109, 110, 111 Daten gespeichert werden und/oder sind.

Das Einwählnetz 102 und das Heimatnetz 104 sind über eine Datenleitung 112, über welche digitale Daten übertragen werden können, miteinander verbunden. Das Mobiltelefon 101 und das Einwählnetz 102 sind über ein beliebiges Übertragungsmedium 113 zur Übertragung von digitalen Daten miteinander verbunden.

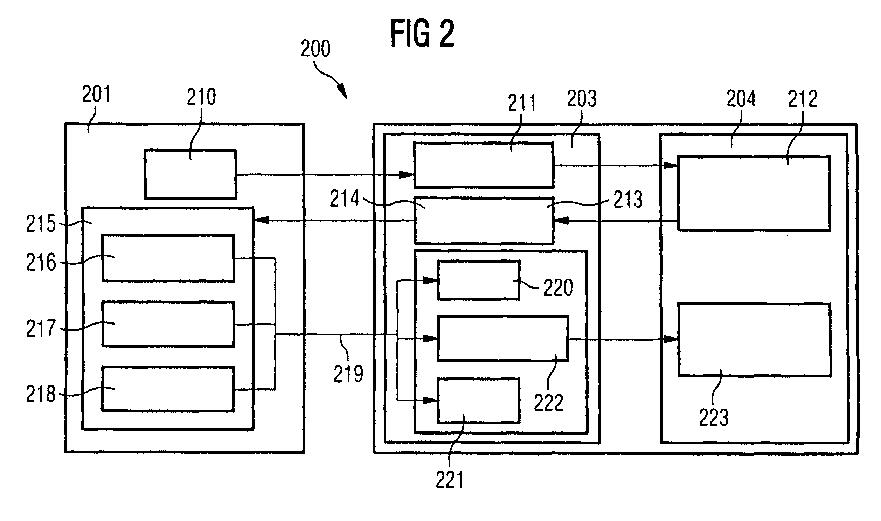

In **Fig.2** ist die Vorgehensweise bei einer Überprüfung einer Authentizität des Mobiltelefons 101 und die Vorgehensweise bei einer Überprüfung der Authentizität des Heimatnetzes 104 bzw. des Heimatnetzbetreibers 105 symbolhaft dargestellt und wird im folgenden kurz und auszugsweise erläutert.

Eine Übertragung von Daten ist in **Fig.2** jeweils durch einen Pfeil dargestellt. Eine Richtung eines Pfeils kennzeichnet eine Übertragungsrichtung bei einer Datenübertragung.

Die im folgende beschriebene und in **Fig.2** symbolhaft dargestellte Vorgehensweise basiert auf einem sogenannten 3G TS 33.102 Version 3.0.0-Standard, welcher eine Sicherheits-Architektur eines Mobilfunksystems beschreibt und in [1] beschrieben ist.

Bei einer Kommunikation wählt sich das Mobiltelefon 201 in das Einwählnetz 203 ein 210. Zu Beginn der Kommunikation erfolgt eine Überprüfung sowohl der Authentizität des Mobiltelefon 201 als auch der Authentizität des Heimatnetzes 204 bzw. des Heimatnetzbetreibers.

Dazu fordert das Einwählnetz 203 Authentifikationsdaten, mit welchen die Überprüfung der Authentizität des Nutzers 201 und des Heimatnetzes 204 bzw. des Heimatnetzbetreibers möglich ist, von dem Heimatnetz 204 an 211.

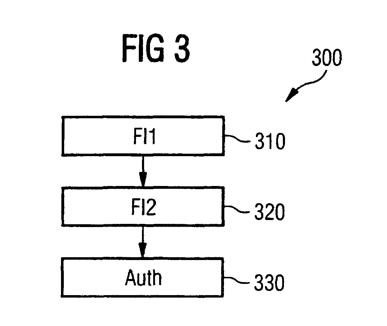

Die Authentifikationsdaten, welche von dem Heimatnetz 204 ermittelt werden, umfassen eine Zufallszahl und eine Sequenzfolgenummer des Heimatnetzes 204 (vgl. **Fig.3** Schritt 310). Die Sequenzfolgennummer des Heimatnetzes 204 wird derart ermittelt, daß ein Zähler des Heimatnetzes 204 bei jedem Kommunikationsversuch zwischen dem Mobiltelefon 201 und dem Heimatnetz 204 die Sequenzfolgenummer des Heimatnetzes 204 um den Wert 1 erhöht.

Es ist anzumerken, daß die Zufallszahl und die Sequenzfolgenummer des Heimatnetzes 204 nur einen Teil der Authentifikationsdaten darstellen und nicht abschließend zu verstehen sind. Weitere Authentifikationsdaten sind in [1] genannt.

Das Heimatnetz 204 überträgt die angeforderten Authentifikationsdaten an das Einwählnetz 203 212. Das Einwählnetz 203 bearbeitet die empfangenen Authentifikationsdaten in geeigneter Weise 213 und überträgt die bearbeiteten Authentifikationsdaten an das Mobiltelefon 201 214.

Das Mobiltelefon 201 überprüft unter Verwendung einer eigenen Sequenzfolgenummer, welche entsprechend der Sequenzfolgenummer des Heimatnetzes 204 gehandhabt wird, und der Sequenzfolgenummer des Heimatnetzes 204 die Authentizität des Heimatnetzes 204 215. Entsprechend des Heimatnetz 204 weist das Mobiltelefon 201 ebenfalls einen Zähler auf.

Die Vorgehensweise bei der Überprüfung der Authentizität des Heimatnetzes 204 ist in [1] beschrieben. Davon abweichende Verfahrensschritte sind im folgenden beschrieben.

Im Rahmen der Überprüfung der Authentizität des Heimatnetzes 203 wird eine sogenannte Überlaufprüfung des Zählers des Mobiltelefons 201 durchgeführt. Durch diese Überlaufprüfung wird ein Überlauf eines zulässigen Zahlenbereichs des Zählers des Mobiltelefons 201 verhindert.

Bei der Überlaufprüfung werden folgende Bedingungen geprüft:
1) Sequenzfolgenummer des Heimatnetzes 204 > Sequenzfolgenummer des Mobiltelefons 201;
2) Sequenzfolgenummer des Heimatnetzes 204 - Sequenzfolgenummer des Mobiltelefons 201 < vorgebbare Abweichung (hier: 1000000);
wobei für die vorgebbare Abweichung gilt:
- vorgebbare Abweichung hinreichend groß, um im normalen bzw. störungsfreien Kommunikationsbetrieb auszuschließen, daß:
   Sequenzfolgenummer des Heimatnetzes 204 - Sequenzfolgenummer des Mobiltelefons 201 > vorgebbare Abweichung;
- max. zulässige Sequenzfolgenummer des Mobiltelefon 201/vorgebbare Abweichung hinreichend groß, um auszuschließen, daß die max. zulässige Sequenzfolgenummer des Mobiltelefon 201 im Betrieb erreicht wird.

Ein Ergebnis der Überprüfung der Authentizität des Heimatnetzes 204, "Authentizität in Ordnung" 216, "Authentizität in Ordnung, aber ein Sequenzfehler aufgetreten" 217 oder "Authentizität nicht in Ordnung" 218, wird von dem Mobiltelefon 201 an das Heimatnetz 204 übertragen 419.

Bei dem Ergebnis "Authentizität in Ordnung" 216 überprüft das Einwählnetz 203, wie es in [1] beschrieben ist, die Authentizität des Mobiltelefons 201 220.

Bei dem Ergebnis "Authentizität nicht in Ordnung" 218 wird die Kommunikation unterbrochen oder neu begonnen 221.

Bei dem Ergebnis "Authentizität in Ordnung, aber ein Sequenzfehler aufgetreten" 217 erfolgt eine Resynchronisation 222. Unter Resynchronisation ist eine Änderung der Sequenzfolgenummer des Heimatnetzes 204 zu verstehen.

Dazu überträgt das Mobiltelefon 201 Resynchronisationsdaten an das Einwählnetz 203 222.

Die Resynchronisationsdaten umfassen dieselbe Zufallszahl, die im Rahmen der Authentifikationsdaten übertragen wurde, sowie die Sequenzfolgenummer des Mobiltelefons 201 (vgl.
**Fig.3** Schritt 320).

Das Einwählnetz 203 bearbeitet die Resynchronisationsdaten in geeignet Weise und überträgt die bearbeiteten Resynchronisationsdaten an das Heimatnetz 204.

Das Heimatnetz überprüft unter Verwendung der bearbeiteten Resynchronisationsdaten die Sequenzfolgenummer des Mobiltelefons 201 und die Sequenzfolgenummer des Heimatnetzes 204 und verändert gegebenenfalls die Sequenzfolgenummer des Heimatnetzes 204 223 (vgl. **Fig.3** Schritt 330).

Anschließend überträgt das Heimatnetz 204 neue Authentifikationsdaten, welche gegebenenfalls die veränderte Sequenzfolgenummer des Heimatnetzes 204 umfassen, an das Einwählnetz 203.

Zur Veranschaulichung der beschriebenen Vorgehensweise sind in **Fig.3** wichtige Schritte 300 der Vorgehensweise dargestellt.

**Fig.3** zeigt einen ersten Schritt 310, im Rahmen dessen die Authentifikationsdaten (erste Fehlerinformation) ermittelt werden.

Im Rahmen eines zweiten Schritts 320 werden die Resynchronisationsdaten (zweite Fehlerinformation) ermittelt.

Im Rahmen eines dritten Schritts 330 werden unter Verwendung der Resynchronisationsdaten die Sequenzfolgenummer des Mobiltelefons und die Sequenzfolgenummer des Heimatnetzes überprüft.

Im folgenden wird eine Alternative des ersten Ausführungsbeispiels beschrieben.

Bei dem alternativen Ausführungsbeispiel ist ein Verfahren realisiert, mit dem das Heimatnetz gegenüber einem Datenverlust bei einem Systemabsturz sicherer gemacht wird.

Dazu wird jeweils in einem vorgebbaren zeitlichen Abstand die aktuelle Sequenzfolgenummer des Heimatnetzes in dem Speicher des Heimatnetzes gespeichert. Eine bei einem Systemabsturz des Heimatnetzes verloren gegangene Sequenzfolgenummer des Heimatnetzes wird derart wiederhergestellt, daß zu dem Wert der gespeicherten Sequenzfolgenummer ein vorgebbarer Aufschlagswert addiert wird. Der vorgebbare Aufschlagswert ist derart bemessen, daß die Summe aus Sequenzfolgenummer des Mobiltelefons und vorgebbare Abweichung nicht überschritten wird.

Bei dem alternativen Ausführungsbeispiel wird der vorgebbare Aufschlagswert derart bestimmt, daß eine durchschnittliche, aus Erfahrungswerten bei einem Betrieb des Kommunikationsnetzes bestimmte Zahl von Authentifikationsversuchen eines Tages des Heimatnetzes mit einem Faktor mit dem Wert 10 multipliziert wird.

In diesem Dokument ist folgende Veröffentlichung zitiert:
[1] 3G TS 33.102 Version 3.0.0-Draft-Standard, 3^{rd} Generation Partnership Project, Technical Specification Group Services and System Aspects, 3G Security, Security Architecture, 05/1999.

## Patentansprüche

1. Verfahren zur Überprüfung einer Authentizität eines ersten Kommunikationsteilnehmers (203,204) in einem Kommunikationsnetz,
- bei dem bei dem ersten Kommunikationsteilnehmer unter Verwendung einer Fehlererkennungsangabe des ersten Kommunikationsteilnehmers und einer Information über eine Zufallsangabe, welche von einem zweiten Kommunikationsteilnehmer (201) in dem Kommunikationsnetz zu dem ersten Kommunikationsteilnehmer übertragen wurde, eine erste Fehlerinformation gebildet wird,
- bei dem die erste Fehlerinformation von dem ersten Kommunikationsteilnehmer zu dem zweiten Kommunikationsteilnehmer übertragen wird,
- bei dem bei dem zweiten Kommunikationsteilnehmer unter Verwendung einer Fehlererkennungsangabe des zweiten Kommunikationsteilnehmers und der Information über die Zufallsangabe eine zweite Fehlerinformation gebildet wird;
- bei dem bei dem zweiten Kommunikationsteilnehmer unter Verwendung der ersten Fehlerinformation und der zweiten Fehlerinformation die Authentizität des ersten Kommunikationsteilnehmers überprüft wird.

2. Verfahren nach Anspruch 1,
bei dem eine Differenz zwischen der Fehlererkennungsangabe des ersten Kommunikationsteilnehmers und der Fehlererkennungsangabe des zweiten Kommunikationsteilnehmers ermittelt wird.

3. Verfahren nach Anspruch 2,
bei dem die Differenz beschränkt wird.

4. Verfahren nach einem der Ansprüche 1 bis 3,
eingesetzt im Rahmen eines Mobilfunksystems.

5. Anordnung zur Überprüfung einer Authentizität eines ersten Kommunikationsteilnehmers (203,204) in einem Kommunikationsnetz,
- bei der der erste Kommunikationsteilnehmer derart eingerichtet ist, daß unter Verwendung einer Fehlererkennungsangabe des ersten Kommunikationsteilnehmers und einer Information über eine Zufallsangabe, welche von einem zweiten Kommunikationsteilnehmer (209) in dem Kommunikationsnetz zu dem ersten Kommunikationsteilnehmer übertragen wurde, eine erste Fehlerinformation gebildet wird und die erste Fehlerinformation zu dem zweiten Kommunikationsteilnehmer übertragen wird;
- bei der der zweite Kommunikationsteilnehmer derart eingerichtet ist, daß unter Verwendung einer Fehlererkennungsangabe des zweiten Kommunikationsteilnehmers und der Information über die Zufallsangabe eine zweite Fehlerinformation gebildet wird und unter Verwendung der ersten Fehlerinformation und der zweiten Fehlerinformation die Authentizität des ersten Kommunikationsteilnehmers überprüft wird.

6. Anordnung nach Anspruch 5,
bei der der erste Kommunikationsteilnehmer ein Dienstanbieter und/oder der zweite Kommunikationsteilnehmer ein Dienstnutzer in dem Kommunikationsnetz sind/ist.

7. Anordnung nach Anspruch 5 oder 6,
bei der eine Fehlererkennungsangabe eine Sequenzfolgenummer ist.

8. Anordnung nach einem der Ansprüche 5 bis 7,
bei der die Information über die Zufallsangabe eine Zufallszahl ist.

9. Anordnung nach einem der Ansprüche 5 bis 8,
bei der der erste Kommunikationsteilnehmer ein Dienstanbieter in dem Kommunikationsnetz und/oder der zweite Kommunikationsteilnehmer ein Dienstnutzer in dem Kommunikationsnetz sind/ist.

10. Anordnung nach Anspruch 9,
bei der der Dienstanbieter ein Mobilfunkbetreiber und/oder der Dienstnutzer ein Mobiltelefon sind/ist.

11. Anordnung nach einem der Ansprüche 5 bis 10, eingesetzt im Rahmen eines Mobilfunksystems.

## Claims

1. Method for checking the authenticity of a first communication subscriber (203, 204) in a communications network,
- in which a first fault information item is formed in the first communication subscriber using a fault detection data item of the first communication subscriber and an information item relating to a random data item which has been transmitted to the first communication subscriber by a second communication subscriber (201) in the communications network;
- in which the first fault information item is transmitted to the second communication subscriber by the first communication subscriber,
- in which a second fault information item is formed in the second communication subscriber using a fault detection data item of the second communication subscriber and the information item relating to the random data item;
- in which the authenticity of the first communication subscriber is checked in the second communication subscriber using the first fault information item and the second fault information item.

2. Method according to Claim 1, in which a difference is determined between the fault detection data item of the first communication subscriber and the fault detection data item of the second communication subscriber.

3. Method according to Claim 2, in which the difference is limited.

4. Method according to one of Claims 1 to 3, used within the scope of a mobile phone system.

5. Arrangement for checking the authenticity of a first communication subscriber (203, 204) in a communications network,
- in which the first communication subscriber is set up in such a way that a first fault information item is formed using a fault detection data item of the first communication subscriber and an information item relating to a random data item which has been transmitted to the first communication subscriber by a second communication subscriber (201) in the communications network, and the first fault information item is transmitted to the second communication subscriber;
- in which the second communication subscriber is set up in such a way that a second fault information item is formed using a fault detection data item of the second communication subscriber and the information item relating to the random data item, and the authenticity of the first communication subscriber is checked using the first fault information item and the second fault information item.

6. Arrangement according to Claim 5, in which the first communication subscriber is a service provider and/or the second communication subscriber is a service user in the communications network.

7. Arrangement according to Claim 5 or 6, in which a fault detection data item is a sequential number.

8. Arrangement according to one of Claims 5 to 7, in which the information relating to the random data item is a random number.

9. Arrangement according to one of Claims 5 to 8, in which the first communication subscriber is a service provider in the communications network and/or the second communication subscriber is a service user in the communications network.

10. Arrangement according to Claim 9, in which the service provider is a mobile phone operator and/or the service user is a mobile phone.

11. Arrangement according to one of Claims 5 to 10, used within the scope of a mobile phone system.

## Revendications

1. Procédé pour vérifier l'authenticité d'un premier partenaire de communication (203, 204) dans un réseau de communication,
- dans lequel une première information d'erreur est formée, au niveau du premier partenaire de communication, en utilisant une indication de reconnaissance d'erreur du premier partenaire de communication et une information sur une indication aléatoire ayant été transmise au premier partenaire de communication à partir d'un second partenaire de communication (201) dans le réseau de communication,
- dans lequel la première information d'erreur est transmise au second partenaire de communication à partir du premier partenaire de communication,
- dans lequel une seconde information d'erreur est formée, au niveau du second partenaire de communication, en utilisant une indication de reconnaissance d'erreur du second partenaire de communication et l'information sur l'indication aléatoire,
- dans lequel l'authenticité du premier partenaire de communication est vérifiée, au niveau du second partenaire de communication, en utilisant la première information d'erreur et la seconde information d'erreur.

2. Procédé selon la revendication 1,
dans lequel une différence entre l'indication de reconnaissance d'erreur du premier partenaire de communication et l'indication de reconnaissance d'erreur du second partenaire de communication est déterminée.

3. Procédé selon la revendication 2,
dans lequel la différence est limitée.

4. Procédé selon l'une des revendications 1 à 3,
utilisé dans le cadre d'un système de radiotéléphonie mobile.

5. Dispositif pour vérifier l'authenticité d'un premier partenaire de communication (203, 204) dans un réseau de communication,
- dans lequel le premier partenaire de communication est aménagé de manière à ce qu'une première information d'erreur soit formée en utilisant une indication de reconnaissance d'erreur du premier partenaire de communication et une information sur une indication aléatoire ayant été transmise au premier partenaire de communication à partir d'un second partenaire de communication (201) dans le réseau de communication, et que la première information d'erreur soit transmise au second partenaire de communication;
- dans lequel le second partenaire de communication est aménagé de manière à ce qu'une seconde information d'erreur soit formée en utilisant une indication de reconnaissance d'erreur du second partenaire de communication et l'information sur l'indication aléatoire, et que l'authenticité du premier partenaire de communication soit vérifiée en utilisant la première information d'erreur et la seconde information d'erreur.

6. Dispositif selon la revendication 5,
dans lequel le premier partenaire de communication est un prestataire de services et/ou le second partenaire de communication est un utilisateur de services dans le réseau de communication.

7. Dispositif selon la revendication 5 ou 6,
dans lequel une indication de reconnaissance d'erreur est un numéro d'ordre de séquence.

8. Dispositif selon l'une des revendications 5 à 7,
dans lequel l'information sur l'indication aléatoire est un nombre aléatoire.

9. Dispositif selon l'une des revendications 5 à 8,
dans lequel le premier partenaire de communication est un prestataire de services dans le réseau de communication et/ou le second partenaire de communication est un utilisateur de services dans le réseau de communication.

10. Dispositif selon la revendication 9,
dans lequel le prestataire de services est un exploitant de radiotéléphonie mobile et/ou l'utilisateur de services est un téléphone mobile.

11. Dispositif selon l'une des revendications 5 à 10,
utilisé dans le cadre d'un système de radiotéléphonie mobile.
